# EUROPEAN PATENT APPLICATION

(11) **EP 4 242 185 A1**
(43) Date of publication of application: **13.09.2023**
(21) Application number: 22160671.8
(22) Date of filing: 08.03.2022
(51) Int. Cl.: C04B 28/06, C04B 28/14, C04B 28/16

(54) **USE OF CALCIUM SULFATE IN AN INORGANIC MORTAR SYSTEM BASED ON ALUMINOUS CEMENT AND GROUND-GRANULATED BLAST-FURNACE SLAG TO INCREASE LOAD VALUES**

(71) Applicant: Hilti Aktiengesellschaft, 9494 Schaan (LI)
(72) Inventor: Schönlein, Markus, 82205 Gilching (DE)
(74) Representative: Hilti Aktiengesellschaft Corporate Intellectual Property

(57) **Abstract**

The present invention pertains to a use of calcium sulfate in an inorganic mortar system for chemical fastening of anchoring means in mineral substrates, comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid and phosphonic acids, and water, and component B comprising blocked ground-granulated blast-furnace slag, water and optionally at least one mineral filler. Moreover, the present invention pertains to a use of calcium sulfate in an inorganic mortar to increase load values, to reduce shrinkage as well as to a method for a chemical fastening of anchoring means, preferably of metal elements, in mineral substrates, such as structures made of brickwork, concrete, pervious concrete or natural stone.

## Description

### FIELD OF THE INVENTION

The present invention pertains to a use of calcium sulfate in an inorganic mortar system for chemical fastening of anchoring means in mineral substrates, comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid and phosphonic acids, and water, and component B comprising blocked ground-granulated blast-furnace slag, water and optionally at least one mineral filler. In particular, the present invention pertains to the use of calcium sulfate in an inorganic mortar system for a chemical fastening of anchoring means in mineral substrates to increase load values as well as to reduce shrinkage. Moreover, the present invention pertains to a method for a chemical fastening of anchoring means, preferably of metal elements, in mineral substrates, such as structures made of brickwork, concrete, pervious concrete or natural stone.

### BACKGROUND OF THE INVENTION

Many inorganic mortar systems, which are sometimes also referred to as kit-of-parts, exist, in which each of the components is intended to be mixed prior to use or during application in order to initiate the curing process to provide good chemical fastening of anchoring means in mineral substrates. For example, organic systems based on free-radically polymerizable resins are used when fast curing is desired. However, such systems are generally known to be polluting, expensive, potentially hazardous and/or toxic for the environment and for the person who handles them and they often need to be specifically labelled. Moreover, organic systems often show a much reduced stability when thermally exposed to strong sunlight or otherwise elevated temperatures thereby decreasing their mechanical performance when it comes to chemically fastening of anchoring means.

In order to overcome these drawbacks, predominantly mineral systems based on aluminous cement have been developed. Aluminous cement has as its major constituent monocalcium aluminate and is widely used in the building and construction industries as the final products evidence a high level of mechanical performance over extended periods of time. Also, aluminous cement is resistant to bases and attains its maximum strength more rapidly than Portland cement and is capable of withstanding solutions of sulfates. Hence, aluminous cement systems are preferably employed in the field of chemical anchoring.

Further, calcium aluminate slurries are known to give high fire resistance for fastening points. However, compared to resin-based fastening mortars the hardening of such systems is rather slow, which requires longer waiting times on job sites and often leads to interruptions in the workflow. This is especially critical for anchoring applications, where immediate loading is of high importance. Additionally, calcium aluminate-based mortars suffer from conversion, which leads to a decrease of performance over time due to transformation of metastable hydrate phases CAH₁₀ and C₂AH₈ to the stable hydrate C₃AH₆.

EP 2 162 410 describes a ready-for-use dual-component system including a part A based aqueous-phase aluminous cement, retarded by boric acid or a salt thereof, and a part B for initiating the curing process. The initiator in part B is made of only lithium salts. EP 0 081 385 also discloses a dual-component system including a set-inhibited aqueous high alumina cement composition and a reactivator composition, including lithium salts. EP 2 794 510 describes a stabilized aqueous suspension comprising aluminous cement and/or calcium sulfoaluminate cement, which is inhibited by a phosphorous-containing compound and can be stored for a sufficient time also at high temperatures. Said stabilized aqueous suspension can serve as a base for surface coatings.

However, these aluminous cement aqueous suspensions retarded by boric acid or salts thereof are often not very stable for a sufficient time to be stored prior to use. Moreover, boric acid is quite toxic as well as ecotoxic. Further, these state-of-the-art systems require a high water-to-cement ratio and are characterized by their unfavorable conversion, which leads to a decrease of performance overtime.

DE 2 311 239 describes an adjuvant composition for improving the setting and hardening properties of aluminous cement and mortar, comprising Lithia, a water-soluble lithium salt and a hydroxylated organic acid, or a salt or ester thereof. Said fluid is incorporated directly into the aluminous cement or into mortars and concretes during their manufacture or may be added to the mixing water during application. However, a disadvantage of this system lies within the fact that the cement composition as well as the activator composition cannot be stored for a sufficient time in order to be ready-for-use and hence have to be freshly prepared before use depending on desired setting and hardening times implying more procedural steps before application. Also, said lithium-based activator components are expensive, its harvesting often from a humanitarian, economic and political point of view problematic and has a high carbon-footprint.

Therefore, there is a need for a ready-for-use multiple-component system, preferably an inorganic system, which is superior over the prior art systems with regard to environmental aspects, health and safety, handling, storage time, sustainability and a good balance between setting and hardening of the mortar. Moreover, it is of interest to provide a system that can be used for chemical fastening of anchoring means in mineral substrates without adversely affecting the handling, characteristics and the mechanical performance of the chemical anchoring system as well as to provide a system that reduces the employed water-to-cement ratio and conversion, which leads to a decrease of performance over time. Finally, there is a need for a system that has low carbon footprint as well as for a system that has an improved durability due to volume stability and hence does not exhibit shrinkage cracking, in particular there is a need for a system that has increased load values.

In view of the above, it is an object of the present invention to provide a multiple-component system, in particular an inorganic mortar system, which overcomes the disadvantages of the prior art systems. In particular, it is an object to provide a inorganic mortar system that is ready-for-use, which can be handled easily and is eco-friendly, which can be stably stored for a certain period of time prior to use, which exhibits a good balance between setting and hardening and still has an excellent mechanical performance when it comes to chemically fastening anchoring means, even under the influence of elevated temperatures and is additionally characterized by its ability to reduce the carbon-footprint, water-to-cement ratio and conversion and in particular exhibits increase load values.

Moreover, it is an object of the present invention to provide an inorganic mortar system that can be used for chemical fastening of anchoring means, preferably of metal elements, in mineral substrates, such as structures made of brickwork, concrete, pervious concrete or natural stone as well as to provide a method for fastening said anchoring means.

These and other objectives as they will become apparent from the ensuring description of the invention are solved by the present invention as described in the independent claims. The dependent claims pertain to preferred embodiments.

### SUMMARY OF THE INVENTION

In one aspect, the present invention pertains to a use of calcium sulfate inorganic mortar system comprising a curable aqueous-phase aluminous cement component A and an initiator component B in aqueous-phase for initiating the curing process, component A further comprising at least one blocking agent selected from the group consisting of boric acid phosphoric acid, metaphosphoric acid, phosphorous acid and phosphonic acids, and water, and component B component B comprising blocked ground-granulated blast-furnace slag, water and optionally at least one mineral filler. In particular, component B comprises ground-granulated blast-furnace slag and a blocking agent selected from the group consisting of gluconic acid, glycolic acid, phosphonic acid, salts and esters thereof, glucose, and mixtures thereof.

In another aspect, the present invention pertains to a use of calcium sulfate in an inorganic mortar system for a chemical fastening of anchoring means in mineral substrates to increase load values.

In another aspect, the present invention provides an inorganic mortar system that is used for chemical fastening of anchoring means, preferably of metal elements, in mineral substrates, such as structures made of brickwork, concrete, pervious concrete or natural stone; and in another aspect provides a method for fastening said anchoring means as well as a method for fastening said anchoring means.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO · Al₂O₃, or CA in the cement chemist notation).

The term "initiator" in the context of the present invention refers to a compound or composition that modifies the chemical environment to start a particular chemical reaction. In the present invention the initiator modifies the pH-value of the mortar suspension thereby de-blocking the hydraulic binder in the final mixture.

The term "binder" or "binder component" in the context of the present invention refers to the calcium-aluminate-based cementitious constituent and other additional optional components, such as for example fillers. In particular, the term "main binder component" refers to component A.

It has been surprisingly found out by the inventors, that the addition of a calcium sulfate to an inorganic mortar system according to the present invention is an easy to handle ready-for-use system for a chemical fastening anchoring means in mineral substrates thereby resulting in a significant increase of load values when compared to a system not comprising calcium sulfate. Moreover, the addition of calcium sulfate reduces shrinkage to a significant extend thereby guaranteeing secure anchoring application. In particular, it has been found that addition of a calcium sulfate to the system based on an aqueous slurry comprising blocked aluminous component as the main binder component and blocked ground-granulated blast-furnace slag (GGBFS) in an aqueous slurry exhibiting an alkaline pH as the second binder component, results in a lower water-to-cement ratio compared to state-of-the-art inorganic component injection mortars that comprise no calcium sulfate and/or an activator component based on fillers. Additionally, it has been found that the long-term strength reduction by conversion that is characteristic for calcium aluminate cements can be mitigated by blending these two cements with calcium sulfate, to produce the stable Stratlingite hydrate phase and enhances formation of ettringite which allows for monosulfate formation, which can also mitigate conversion as it is more stable than the calcium aluminate hydrates formed at low and medium temperatures.

While common calcium aluminate-based binders are relying on a carbonate-source that is either synthesized or mined, to buffer the strength loss by the conversion phenomenon, ground-granulated blast-furnace slag is a waste product from steel production and is therefore cheap and has a low carbon footprint, when re-used as binder. By blocking the ground-granulated blast-furnace slag with for example a sugar, like e.g. gluconate, in water, an alkaline pH is achieved that can be used to activate the blocked calcium aluminate cement component. Hence, there is no need for a separate activation agent like sodium or lithium hydroxide. The evolving alkaline pH from the calcium aluminate cement hydration is then activating the ground-granulated blast-furnace slag.

Further, it has been found that the inorganic mortar system of the present invention does not contain any harmful substances whilst maintaining the standard for chemical anchoring applications, thereby also encompassing a reduced carbon-foot print and labelling. Additionally, it has been found that in particular the use of ground-granulated blast-furnace slag is more sustainable compared to using common Portland cements and has also a lower carbon footprint than synthetic resins.

The present invention pertains to a use of calcium sulfate inorganic mortar system for chemical fastening of anchoring means in mineral substrates, comprising a curable aqueous-phase aluminous cement component A and an initiator component B in aqueous-phase for initiating the curing process. In particular, component A further comprises at least one blocking agent selected from the group consisting of boric acid, phosphoric acid, metaphosphoric acid, phosphorous acid and phosphonic acids, and water, and component B comprises blocked ground-granulated blast-furnace slag, water and optionally at least one mineral filler.

Component A as used in the present invention is based on an aqueous-phase calcium aluminate cement (CAC) or an aqueous-phase calcium sulfoaluminate cement (CAS). The calcium aluminate cement which can be used in the present invention is characterized by rapid set and rapid hardening, rapid drying and shrinkage compensation when mixed with calcium sulfates, excellent resistance to corrosion and shrinkage. Such a calcium aluminate cement suitable to be used in the present invention is for example Ternal^{®} White (Kerneos, France).

Component A as used in the present invention comprises at least about 40 wt.-%, preferably at least about 50 wt.-%, more preferably at least about 60 wt.-%, most preferably at least about 70 wt.-%, from about 40 wt.-% to about 95 wt.-%, preferably from about 50 wt.-% to about 90 wt.-%, more preferably from about 60 wt.-% to about 85 wt.-%, most preferably from about 70 wt.-% to about 80 wt.-% of calcium aluminate cement, based on the total weight of component A.

The blocking agent comprised in component A as used according to the present invention is selected from the group consisting of boric acid, phosphoric acid, metaphosphoric acid, phosphorous acid and phosphonic acids, preferably is phosphoric acid or metaphosphoric acid, most preferably is phosphoric acid, in particular an 85% aqueous solution of phosphoric acid. Component A comprises at least about 0.1 wt.-%, preferably at least about 0.3 wt.-%, more preferably at least about 0.4 wt.-%, most preferably at least about 0.5 wt.-%, from about 0.1 wt.-% to about 20 wt.-%, preferably from about 0.1 wt.-% to about 15 wt.-%, more preferably from about 0.1 wt.-% to about 10 wt.-%, most preferably from about 0.3 wt.-% to about 10 wt.-% of said blocking agent, based on the total weight of component A. In a preferred embodiment, component A comprises from about 0.3 wt.-% to about 10 wt.-% of 85% aqueous solution of phosphoric acid, based on the total weight of component A.

In an advantageous embodiment, component A further comprises the following characteristics, taken alone or in combination.

Component A may additionally comprise a plasticizer. The plasticizer may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component A may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of component A.

Component A may additionally comprise a thickening agent. The thickening agents which can be used in the present invention may be selected from the group consisting of organic products, such as xanthan gum, welan gum or DIUTAN^{®} gum (CPKelko, USA), starched-derived ethers, guar-derived ethers, polyacrylamide, carrageenan, agar agar, and mineral products, such as clay, and their mixtures. Suitable thickening agents are commercially available products. Component A comprises at least about 0.01 wt.-%, preferably at least about 0.1 wt.-%, more preferably at least about 0.2 wt.-%, most preferably at least about 0.3 wt.-%, from about 0.01 wt.-% to about 10 wt.-%, preferably from about 0.1 wt.-% to about 5 wt.-%, more preferably from about 0.2 wt.-% to about 1 wt.-%, most preferably from about 0.3 wt.-% to about 0.7 wt.-% of said thickening agent, based on the total weight of component A.

Component A may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands). Component A comprises at least about 0.001 wt.-%, preferably at least about 0.005 wt.-%, more preferably at least about 0.01 wt.-%, most preferably at least about 0.015 wt.-%, from about 0.001 wt.-% to about 1.5 wt.-%, preferably from about 0.005 wt.-% to about 0.1 wt.-%, more preferably from about 0.01 wt.-% to about 0.075 wt.-%, most preferably from about 0.015 wt.-% to about 0.03 wt.-% of said antibacterial or biocidal agent, based on the total weight of component A. In a preferred embodiment, component A comprises from about 0.015 wt.-% to about 0.03 wt.-% of Nuosept OB 03, based on the total weight of component A.

Component A may further comprise at least one mineral filler. The mineral filler which can be used in the present invention may be limestone fillers, such as calcites, sand, corundum, dolomite, alkaline-resistant glass, crushed stones, gravels, pebbles, quartz, quartz powder, quartz sand, clay, fly ash, fumed silica, brick flour, rice peel ash, phonolite, calcined clay and metakaolin, carbonate compounds, pigments, titanium oxides, light fillers or mixtures thereof. Suitable fillers are commercially available products. Component A may comprise at least about 1 wt.-%, preferably at least about 2 wt.-%, more preferably at least about 5 wt.-%, most preferably at least about 8 wt.-%, said at least one filler, based on the total weight of component A.

The water content comprised in component A is at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component A.

The presence of a plasticizer, thickening agent, an antibacterial, biocidal agent or filler does not change the overall inorganic nature of the cementitious component A.

Component A comprising the calcium aluminate cement is present in aqueous-phase, preferably in form of a slurry or paste.

Initiator component B as used in the present invention comprises blocked ground-granulated blast-furnace slag, water and optionally at least one mineral filler.

The ground-granulated blast-furnace slag preferably comprises from 30 to 45 % calcium oxide (CaO), from 30 to 45 % silicon dioxide (SiO₂), from 1 to 15 % aluminum oxide (Al₂O₃) and from 4 to 17 % Magnesium oxide (MgO), and 0.5 to 1 % sulfur (S). Further characteristic contents of the ground-granulated blast-furnace slag are ferric oxide (Fe₂O₃), sodium oxide (Na₂O), potassium oxide (K₂O), chloride, sulfur trioxide (SO₃) and manganese oxide (Mn₂O₃), which preferably represent less than 5 % of the ground-granulated blast-furnace slag.

Component B as used in the present invention comprises at least about 5 wt.-%, preferably at least about 10 wt.-%, more preferably at least about 20 wt.-%, most preferably at least about 30 wt.-%, from about 5 wt.-% to about 80 wt.-%, preferably from about 10 wt.-% to about 70 wt.-%, more preferably from about 15 wt.-% to about 60 wt.-%, most preferably from about 20 wt.-% to about 50 wt.-% of ground-granulated blast-furnace slag, based on the total weight of component B.

The blocked ground-granulated blast-furnace slag of component B comprises ground-granulated blast-furnace slag and a blocking agent. The blocking agent for the ground-granulated blast-furnace slag is selected from the group consisting of gluconic acid, glycolic acid, phosphonic acid, salts and esters thereof, glucose, and mixtures thereof. Preferably, the blocking agent is a gluconate salt, more preferably is sodium gluconate.

Component B as used comprises at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said blocking agent, based on the total weight of component B. In a most preferred embodiment, component B comprises from about 0.2 to about 0.4 wt.-% of sodium gluconate, based on the total weight of component B.

The water content comprised in component B is at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component B.

It has been found that if the inorganic mortar system comprises a mixture of calcium aluminate cement (CAC), ground-granulated blast-furnace slag (GGBFS) and calcium sulfate (CaSO₄), rapid ettringite formation takes place during hydration. In concrete chemistry hexacalcium aluminate trisulfate hydrate, represented by the general formula (CaO)₆(Al₂O₃)(SO₃)₃·32 H₂O or (CaO)₃(Al₂O₃)(CaSO₄)₃·32H₂O, is formed by the reaction of calcium aluminate with calcium sulfate, resulting in quick setting and hardening as well as in shrinkage compensation or even expansion.

The calcium sulfate used in the inorganic mortar system for a chemical fastening of anchoring means in mineral substrates according to the present invention, is in the form of calcium sulfate anhydrite, calcium sulfate hemihydrate or calcium sulfate dihydrate or mixtures thereof. In a preferred embodiment of the present invention the calcium sulfate used is in the form of calcium sulfate hemihydrate.

The calcium sulfate used in the inorganic mortar system for a chemical fastening of anchoring means in mineral substrates according to the present invention, is comprised in the inorganic mortar system in at least about 5 wt.-%, preferably at least about 10 wt.-%, more preferably at least about 15 wt.-%, most preferably at least about 20 wt.-%, from about 5 wt.-% to about 70 wt.-%, preferably from about 10 wt.-% to about 60 wt.-%, more preferably from about 15 wt.-% to about 50 wt.-%, most preferably from about 20 wt.-% to about 40 wt.-% of calcium sulfate, based on the total weight of component B.

The ratio of the calcium sulfate used in the inorganic mortar system for a chemical fastening of anchoring means in mineral substrates according to the present invention, to calcium aluminate cement is in the range of from 0.01 to 0.25, preferably in the range of from 0.05 to 0.15.

The calcium sulfate used according to the present invention, is preferably comprised in the initiator component B of the inorganic mortar system.

Preferably, component B as used in the present invention comprises at least about 5 wt.-%, preferably at least about 10 wt.-%, more preferably at least about 15 wt.-%, most preferably at least about 20 wt.-%, from about 5 wt.-% to about 80 wt.-%, preferably from about 10 wt.-% to about 70 wt.-%, more preferably from about 15 wt.-% to about 60 wt.-%, most preferably from about 20 wt.-% to about 40 wt.-% of calcium sulfate, based on the total weight of component B.

Component B as used in the present invention may optionally comprise at least one mineral filler. The mineral filler which can be used in the present invention may be limestone fillers, such as calcites, sand, corundum, dolomite, alkaline-resistant glass, crushed stones, gravels, pebbles, quartz, quartz powder, quartz sand, clay, fly ash, fumed silica, brick flour, rice peel ash, phonolite, calcined clay and metakaolin, carbonate compounds, pigments, titanium oxides, light fillers or mixtures thereof. Suitable fillers are commercially available products. Component B may comprise at least about 1 wt.-%, preferably at least about 10 wt.-%, more preferably at least about 20 wt.-%, most preferably at least about 30 wt.-%, said at least one filler, based on the total weight of component B. The at least one mineral filler comprised in component B according to the present invention is preferably a mixture of mineral fillers. The at least one mineral filler is chosen to obtain a particle size complementary to that of the aluminous cement and to the ground-granulated blast-furnace slag.

In an advantageous embodiment, component B further comprises the following characteristics, taken alone or in combination.

Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Cellosize^{™}, Acrysol ASE-60 (The Dow Chemical Company). Component B comprises at least about 0.01 wt.-%, preferably at least about 0.05 wt.-%, more preferably at least about 0.1 wt.-%, most preferably at least about 0.3 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.1 wt.-% to about 1 wt.-% of said thickening agent, based on the total weight of component B.

In a preferred embodiment, component B may comprise a cellulosic thickener, such as hydroxymethyl cellulose (HMC) or hydroxyethyl cellulose (HEC).

Component B may additionally comprise also a plasticizer. The plasticizer may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component B may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of component B.

The presence of a plasticizer and thickening agent does not change the overall inorganic nature of component B.

Component B as used comprising the blocked ground-granulated blast-furnace slag is present in aqueous-phase, preferably in form of a slurry or paste.

Further, component A and/or component B may comprise an accelerator component. The accelerator component may be constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. Component A and/or B may comprise at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said accelerator, based on the total weight of component A or B, respectively.

It is preferred that the pH-value of component B is above 10, more preferably above 11 and most preferably is above 12, in particular in the range between 10 and 14, preferably between 11 and 13.

In a most preferred embodiment, component A comprises or consists of the following components:
70 to 80 wt.-% of calcium aluminate cement,
0.5 to 1.5 wt.-% of phosphoric acid,
0.5 to 1.5 wt.-% of a thickening agent,
0.5 to 1.5 wt.-% of a plasticizer,
0.001 to 0.05 wt.-% of an antimicrobial or biocidal agent,
15 to 25 wt.-% of water,
optionally 0.01 wt.-% to 5 wt.-% of lithium sulfate or lithium sulfate monohydrate, and
optionally 5 to 20 wt.-% of mineral fillers.

In a preferred embodiment, component B comprises or consists of the following components:
20 wt.-% to 50 wt.-% of ground-granulated blast-furnace slag,
5.0 wt.-% to 50 wt.- of calcium sulfate,
0.1 to 0.5 wt.-% of sodium gluconate,
10 to 30 wt.-% of at least one mineral filler,
0.01 wt.-% to 0.5 wt.-% of a thickening agent,
0.5 to 1.5 wt.-% of a plasticizer,
15 wt.-% to 30 wt.-% of water, and
optionally 0.1 wt.-% to 5 wt.-% of lithium sulfate or lithium sulfate monohydrate.

Component A of the present invention may be prepared as follows: The phosphor-containing blocking agent is mixed with water, so that the pH-value of the resulting mixture is about 2. Plasticizer is added and the mixture homogenized. Aluminous cement, optionally calcium sulfate, and optionally mineral filler are premixed and added stepwise to the mixture whilst increasing the stirring speed, so that the pH-value of the resulting mixture is about 4. Finally, thickening agent and antibacterial/biocidal agent as well as optionally accelerator component are added and mixed until complete homogenization of the mixture.

Component B of the present invention may be prepared as follows: Plasticizer, blocking agent and thickening agent are mixed with water, followed by stepwise the addition of ground-granulated blast-furnace slag, calcium sulfate and filler(s) whilst increasing the stirring speed until the mixture homogenizes. Finally, optionally accelerator component may be added until complete homogenization of the mixture.

Component A and B are present in aqueous phase, preferably in form of a slurry or paste. In particular, components A and B have a pasty to fluid aspect according to their respective compositions. In one preferred embodiment, component A and component B are in paste form thereby preventing sagging at the time of mixing the two components.

The weight ratio between component A and component B (A/B) is preferentially comprised between 7/1 and 1/3, preferably is 3/1. Preferably, the composition of the mixture comprises 75 wt.-% of component A and 25 wt.-% of component B. In an alternative embodiment, the composition of the mixture comprises 25 wt.-% of component A and 75 wt.-% of component B.

The inorganic system is of mineral nature, which is not affected by the presences of additional thickening agents or other agents.

The shelf life of the inorganic system depends on the individual shelf life of each of the respective components, in particular component A as well as component B has a shelf life of at least six months at ambient temperature so as to protect the system from the storing and supply delays. Most preferably, component A and B are individually stable for at least six months. The component A and B were stored in tightly closed containers to avoid evaporation of water at 20°C and checked for any changes in fluidity, homogeneity, whether sedimentation occurs, and pH-value after several time intervals. The properties of all components remained unaffected after 6 months, thus the shelf life is at least 6 months at 20°C.

It is preferred that the inorganic mortar system has an initial set-time of at least 5 min, preferably of at least 10 min, more preferably of at least 15 min, most preferably of at least 20 min, in particular in the range of from about 5 to 25 min, preferably in the range of about 10 to 20 min, after mixing of the two components A and B.

In the multi-component mortar system, especially inorganic mortar system, the volume ratio of cementitious component A to initiator component B is 1:1 to 7:1, preferably is 3:1. In an alternative embodiment, the volume ratio of cementitious component A to initiator component B is 1:3 to 1:2.

After being produced separately, component A and component B are introduced into separate containers, from which they are ejected by means of mechanical devices and are guided through a mixing device. The inorganic mortar system of the present invention is preferably a ready-for-use system, whereby component A and B are separately arranged from each other in a multi-chamber device, such as a multi-chamber cartridge and/or a multi-chamber cylinder or in inorganic capsules, preferably in a two-chamber cartridge or in inorganic capsules. The multi-chamber system preferably includes two or more foil bags for separating curable component A and initiator component B. The contents of the chambers or bags which are mixed together by a mixing device, preferably via a static mixer, can be injected into a borehole. The assembly in multiple chamber cartridges or pails or sets of buckets is also possible.

The hardening aluminous cement composition exiting from the static mixer is inserted directly into the borehole, which is required accordingly for fastening the anchoring means, and has been initially introduced into the mineral substrate, during the chemical fastening of anchoring means, whereupon the construction element to be fastened, for example an anchor rod, is inserted and adjusted, whereupon the mortar composition sets and hardens. In particular, the inorganic system of the present invention is to be considered as a chemical anchor for fastening anchoring means, in particular metal elements.

The inorganic mortar system comprising calcium sulfate of the present invention can be used for chemical fastening of anchoring means, preferably of metal elements, such as anchor rods, in particular threaded rods, bolts, steel reinforcement bars or the like into mineral substrates, such as structures made of brickwork, concrete, pervious concrete or natural stone. In particular, the inorganic mortar system of the present invention can be used for chemical fastening of anchoring means, such as metal elements, in boreholes. It can be used for anchoring purposes encompassing an increase in the load capacity at temperatures, above room temperature or at elevated temperatures, and/or encompassing an increase in the bond stress in the cured state.

In particular, the inorganic mortar system of the present invention is used in a method for a chemical fastening of anchoring means in mineral substrates, comprising the following steps: introducing a borehole into a mineral substrate, mixing component A and component B to obtain a hardening aluminous cement composition, inserting this aluminous cement composition directly into the borehole, inserting and adjusting the construction element to be fastened, allowing the aluminous cement composition to harden and set.

Moreover, the inorganic mortar system of the present invention may be used as a coating or for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements.

The following examples illustrate the invention without thereby limiting it.

### EXAMPLES

### 1. Preparation of component A and component B

The cementitious component A as well as the initiator component B are initially produced by mixing the constituents specified in Tables 1 and 2, respectively. The proportions that are given are expressed in wt.-%.

In particular, 19.48 grams deionized water, 0.75 grams of 85% phosphoric acid (blocking agent), 0.6 grams Ethacryl G (superplasticizer), and 0.02 grams Nuosept^{®} (biocide) were homogenized at room temperature, and whilst stirring with a dissolver, the calcium aluminate cement (78.50 grams, pure Ternal White^{®}) is added in subsequent small portions, to obtain finally a smooth, liquid pasty slurry of the blocked cement in water, the pH being below 7. After addition of the calcium aluminate cement, 0.15 grams of lithium sulfate monohydrate and 0.5 grams xanthan gum (thickener) were added and the slurry was homogenized, at 2500 rpm it for 5 min.

**Table 1: Composition of binder component A.**

| **Ingredients** | **Binder component A** |
|---|---|
| Water | 19.48 |
| Ternal White | 78.50 |
| Li₂SO₄ | 0.15 |
| 85% H₃PO₄ | 0.75 |
| Xanthan Gum | 0.50 |
| Ethacryl G | 0.6 |
| Nuosept | 0.02 |

| | |
|---|---|
| Phosphoric acid 85% marketed by Sigma-Aldrich Chemie GmbH, Germany Ternal White^{®} marketed by Kerneos S.A., France LiSO₄ marketed by Sigma-Aldrich Chemie GmbH, Germany Xanthan Gum marketed by Colltec GmbH & CO. KG, Germany Nuosept OB 03 marketed by Ashland Nederland B.V., The Netherlands Ethacryl G marketed by Coatex, Arkema Group, France | |

An exemplary preparation of component B is as follows: In 21.00 grams of deionized water, 1.0 gram of Ecodis^{®} P50 (plasticizer), 0.1 gram Cellosize^{™} QP-100MH (thickener) and 0.22 grams of sodium gluconate were dissolved. Whilst stirring with a dissolver, 50 grams of a ground-granulated blast-furnace slag, 10 grams of sand and 5 grams of Betocarb UF were added under vigorous stirring. Then, the respective amount of calcium sulfate hemihydrate (Keramod 125) was added and stirred to obtain finally a smooth, liquid pasty slurry of the solids in water, the pH being above 11.

**Table 2: Composition of initiator components B0-B6.**

| **Ingredients** | **B0** | **B1** | **B2** | **B3** | **B4** | **B5** | **B6** |
|---|---|---|---|---|---|---|---|
| Water | 25.00 | 26.68 | 26.68 | 26.68 | 26.68 | 26.68 | 26.68 |
| GGBFS | 50.00 | 52.00 | 47.00 | 50.00 | 37.00 | 27.00 | 17.00 |
| Sodium gluconate | 0.22 | 0.22 | 0.22 | 0.22 | 0.22 | 0.22 | 0.22 |
| Quartzsand F32 | 14.00 | 10.00 | 10.00 | - | 10.00 | 10.00 | 10.00 |
| Betocarb UF | 9.68 | 5.00 | 5.00 | - | 5.00 | 5.00 | 5.00 |
| Keramod 125 | - | 5.00 | 10.00 | 20.00 | 20.00 | 30.00 | 40.00 |
| Cellosize 100 MH | 0.10 | 0.10 | 0.10 | 0.10 | 0.10 | 0.10 | 0.10 |
| Ecodis P50 | 1.00 | 1.00 | 1.00 | 1.00 | 1.00 | 1.00 | 1.00 |

| | | | | | | | |
|---|---|---|---|---|---|---|---|
| GGBFS - ground-granulated blast-furnace slag marketed by Holcim Deutschland GmbH, Germany Sodium gluconate marketed by Jungbunzlauer GmbH, Germany Quartzsand F32 marketed by Quartzwerke GmbH, Germany Betocarb UF marketed by Omya GmbH, Germany Cellosize marketed by The Dow Chemical Company, USA Ecodis P50 marketed by Coatex, Arkema Group, France | | | | | | | |

### 2. Determination of the mechanical performance

After the preparation, the binder component A and the respective B-component were filled into separate chambers of a inorganic plastic hard cartridges with a defined ratio of component A:B = 3:1. The hard cartridge was placed into a dispenser, a static mixer was attached, and the mortar was injected into steel sleeves and a threaded rod (M8) was inserted. The steel sleeves exhibited a depth of 28 mm and a diameter of 10 mm. The pull-out strength was measured after certain curing times to measure the improvement of the performance over the curing time of the mortar. Ultimate failure loads are calculated as bond strengths and given in N/mm² in Table 3.

**Table 3: Bond strengths of the comparative example 1 and inventive examples 2-7 after different curing times.**

| **Example** | **Mixing ratio of A:B = 3:1** | **Curing time and pull-out values [N/mm²]** | | |
|---|---|---|---|---|
| | | **24h** | **48h** | **14d** |
| **1** | A + B0 | 14.35 | 17.98 | 26.87 |
| **2** | A + B1 | 19.27 | 23.54 | 30.32 |
| **3** | A + B2 | 19.44 | 23.65 | 30.84 |
| **4** | A + B3 | 20.39 | 23.14 | - |
| **5** | A + B4 | 23.54 | 25.70 | 32.14 |
| **6** | A + B5 | 25.03 | 28.03 | 32.24 |
| **7** | A + B6 | 23.84 | 27.42 | 30.98 |

Table 3 shows that the blocked slag slurry comprising calcium sulfate can be mixed with the blocked aluminate slurry and achieve increased load values already within 24 hours of curing. From the results shown, it can be clearly seen that the use of calcium sulfate in the blocked slag slurry leads to significantly higher bond strength, already after 24h, allowing earlier loading and exhibiting a higher load capacity compared to the system without calcium sulfate.

As it has been shown above, the inorganic mortar system of the present invention provides curing rates and mechanical strength comparable to those of systems known in the art, but the essentially mineral composition thereof makes it far less toxic and very little polluting for the environment as well as allows for a more cost-effective production than of the known system of the prior art.

Further it has been shown that the addition of calcium sulfate to such a system to provoke the formation of the voluminous hydrate phase Ettringite that counteracts shrinkage. The formation of ettringite by the addition of a calcium sulfate source allows for monosulfate formation, which can also mitigate conversion as it is more stable than the calcium aluminate hydrates formed at low and medium temperatures. Additionally, binders holding a low water-to-cement ratio exhibit a higher strength and better durability due to their denser microstructure compared to mortars possessing a high water-to-cement ratio.

The addition of calcium sulfate in the blocked slag slurry does not compromise the storage stability of the slurry and allows further after mixing with the aluminous cement for the formation of ettringite which compensates shrinkage of the mortar and yields higher pull-out strength and also improves durability due to volume stability (no shrinkage cracking).

Advantageously, it has been proven that ground-granulated blast-furnace slag, a waste product from steel production and therefore a cheap alternative having a low carbon footprint, when re-used as binder and additionally calcium sulfate, may be employed in an inorganic fastening system.

Further, it has been shown that the inorganic mortar system of the present invention does not contain any harmful substances whilst maintaining the standard for chemical anchoring applications, thereby also encompassing a reduced carbon-foot print and labelling. Additionally, it has been demonstrated that in particular the use of ground-granulated blast-furnace slag is more sustainable compared to using common Portland cements and has also a lower carbon footprint than synthetic resins.

## Claims

1. Use of calcium sulfate in an inorganic mortar system comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid and phosphonic acids, and water, and component B comprising blocked ground-granulated blast-furnace slag, water and optionally at least one mineral filler.

2. Use according to claim 1, wherein the calcium sulfate is in the form of calcium sulfate anhydrite, calcium sulfate hemihydrate or calcium sulfate dihydrate or mixtures thereof, preferably is in the form of calcium sulfate hemihydrate.

3. Use according to claim 1 or 2, wherein the ratio of calcium sulfate to calcium aluminate cement is in the range of from 0.01 to 0.25, preferably in the range of from 0.05 to 0.15.

4. Use according to any one of the preceding claims, wherein the calcium sulfate is comprised in the initiator component B of the inorganic mortar system.

5. Use according to any one of the preceding claims, wherein the blocked ground-granulated blast-furnace slag comprises ground-granulated blast-furnace slag and a blocking agent for the ground-granulated blast-furnace slag is selected from the group consisting of gluconic acid glycolic acid, phosphonic acid, salts and esters thereof, glucose, and mixtures thereof.

6. Use according to any one of the preceding claims, wherein the ground-granulated blast-furnace slag is present in a range of from about 10 wt.-% to about 70 wt.-%, based on the total weight of component B.

7. Use according to any one of the preceding claims, wherein the blocking agent for the ground-granulated blast-furnace slag is present in a range of from about 0.05 wt.-% to about 20 wt.-%, based on the total weight of component B.

8. Use according to any one of the preceding claims, wherein the blocking agent is sodium gluconate.

9. Use according to any one of the preceding claims, wherein component B comprises a thickening agent, preferably a cellulosic thickener, such as hydroxymethyl cellulose or hydroxyethyl cellulose.

10. Use according to any one of the preceding claims, wherein the at least one mineral filler in component B is a limestone filler, sand, corundum, dolomite, alkaline-resistant glass, crushed stones, gravels, pebbles, quartz, quartz powder, quartz sand, clay, fly ash, fumed silica, brick flour, rice peel ash, phonolite, calcined clay and metakaolin, carbonate compounds, pigments, titanium oxides, light fillers or mixtures thereof.

11. Use according to any one of the preceding claims, wherein the shelf life of component A and component B is at least six months.

12. Use according to any one of the preceding claims, wherein component A and component B are in form of a slurry or paste.

13. Use according to any one of the preceding claims, wherein the pH-value of component B is above 10.

14. Use according to any one of the preceding claims, wherein component B comprises
20 wt.-% to 50 wt.-% of ground-granulated blast-furnace slag,
5.0 wt.-% to 50 wt.- of calcium sulfate,
0.1 to 0.5 wt.-% of sodium gluconate,
10 to 30 wt.-% of at least one mineral filler,
0.01 wt.-% to 0.5 wt.-% of a thickening agent,
0.5 to 1.5 wt.-% of a plasticizer,
15 wt.-% to 30 wt.-% of water, and
optionally 0.1 wt.-% to 5 wt.-% of lithium sulfate or lithium sulfate monohydrate.

15. Use of the inorganic mortar system according to any one of the preceding claims for chemical fastening of anchoring means in mineral substrates.

16. Method for a chemical fastening of anchoring means in mineral substrates, **characterized in that** an inorganic mortar system comprising calcium sulfate is used, wherein the inorganic mortar system comprises a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid and phosphonic acids, and water, and component B comprising blocked ground-granulated blast-furnace slag, water and optionally at least one mineral filler, and wherein the method comprises the following steps:
- introducing a borehole into a mineral substrate
- mixing component A and component B to obtain a hardening aluminous cement composition
- inserting this aluminous cement composition directly into the borehole
- inserting and adjusting the construction element to be fastened
- allowing the aluminous cement composition to harden and set.
